# EUROPÄISCHE PATENTSCHRIFT

(11) **EP 1 590 737 B1**
(45) Veröffentlichungstag und Bekanntmachung des Hinweises auf die Patenterteilung: **07.11.2007**
(21) Anmeldenummer: 04704171.0
(22) Anmeldetag: 22.01.2004
(51) Int. Cl.: G06F 11/36, B60R 16/02

(54) **STEUERGERÄT FÜR EIN KRAFTFAHRZEUG UND KOMMUNIKATIONSVERFAHREN DAFÜR**
CONTROL DEVICE FOR A MOTOR VEHICLE AND COMMUNICATION METHOD THEREFOR
DISPOSITIF DE COMMANDE CON U POUR UN VEHICULE ET PROCEDE DE COMMUNICATION DESTINE A CE DISPOSITIF DE COMMANDE

(30) Priorität: 30.01.2003 DE 10303490
(43) Veröffentlichungstag der Anmeldung: 02.11.2005
(73) Patentinhaber: ROBERT BOSCH GMBH, 70442 Stuttgart (DE)
(72) Erfinder: LAICHINGER, Martin, 73061 Ebersbach (DE); AUE, Axel, 70825 Korntal-Muenchingen (DE); HAECKER, Joerg, 73732 Esslingen (DE)
(86) Internationale Anmeldenummer: PCT/DE2004/000087
(87) Internationale Veröffentlichungsnummer: WO 2004/068346

(56) Entgegenhaltungen:
- DE-A- 10 036 278
- US-A- 5 491 793
- US-A1- 2002 144 235
- US-B1- 6 311 294

## Beschreibung

### Stand der Technik

Die vorliegende Erfindung betrifft ein Steuergerät zum Steuern von Funktionen eines Kraftfahrzeugs, insbesondere des Motors eines solchen Kraftfahrzeugs wie etwa Kraftstoffeinspritzung, Zündzeitpunkt, etc. sowie ein Verfahren für die Kommunikation mit einem solchen Gerät. Ein solches Steuergerät verfügt im Allgemeinen über einen Prozessor, der, gesteuert durch ein Betriebsprogramm, Messwerte von Betriebsparametern des Kraftfahrzeugs von externen Funktionseinheiten empfängt und von diesen Messwerten Befehle zum Steuern der gleichen oder anderer Funktionseinheiten ableitet, die an die Funktionseinheiten übertragen werden.

Es ist bekannt, für die Kommunikation zwischen dem Steuergerät und den diversen Funktionseinheiten einen Bus, z.B. nach dem CAN-Standard, einzusetzen, an den das Steuergerät und die diversen Funktionseinheiten angeschlossen sind. Ein solcher Bus muss zum einen echtzeitfähig sein, d.h. er muss gewährleisten können, dass zwischen dem Aufnehmen eines Messwerts durch eine Funktionseinheit und dem Eintreffen eines in Reaktion auf den Messwert von dem Steuergerät erzeugten Steuerbefehl an der gleichen oder einer anderen Funktionseinheit eine vorgegebene Verzögerungszeit nicht überschritten wird. Außerdem muss die Übertragung auf dem Bus wirksam gegen Übertragungsfehler abgesichert sein, um Fehlsteuerungen zu vermeiden. Diese Anforderungen beschränken die auf dem Bus erreichbaren Übertragungsraten.

Bei der Neuentwicklung von Steuergeräten stellt sich das Problem, dass wesentlich größere Datenmengen mit dem Steuergerät ausgetauscht werden müssen, als dies beim späteren Einsatz des fertigen Steuergeräts in einem Kraftfahrzeug der Fall ist. Diese großen Datenmengen kommen dadurch zustande, dass das Steuergerät nicht nur mit den Funktionseinheiten des Motors (oder mit Emulatoren, die sich gegenüber dem Steuergerät als diese Funktionseinheiten ausgeben) kommunizieren muss, sondern zusätzlich noch mit einem externen Entwicklungstool, das es einem Entwickler ermöglicht, die Abarbeitung des Steuerprogramms durch den Prozessor detailliert zu verfolgen und zu beeinflussen. Wenn die Kommunikation mit dem Entwicklungstool auf dem gleichen Bus stattfindet, über den das Steuergerät mit den Funktionseinheiten kommuniziert, ergibt sich das Problem, dass dessen Übertragungskapazität durch die Kommunikation mit den Funktionseinheiten bereits weitgehend ausgeschöpft ist und für die Kommunikation mit dem Entwicklungstool nicht mehr ausreichend Kapazität zur Verfügung steht. Eine daraus resultierende Verzögerung der Datenübertragung zum Entwicklungstool kann fälschlicherweise den Eindruck einer Fehlfunktion des Steuergerätes hervorrufen. Zwar ließe sich die Übertragung an das Entwicklungstool beschleunigen, in dem diesem auf dem Bus eine ausreichend hohe Priorität zugewiesen wird, doch führt dies wiederum dazu, dass Anforderungen an das Echtzeitverhalten der Kommunikation zwischen Steuergerät und Funktionseinheiten nicht zuverlässig erfüllt werden können.

Das Dokument EP-0-890-906 offenbart ein Kraftfahrzeugsteurgerät mit einer Diagnoseschnittstelle.

Ein Ansatz zur Lösung dieses Problems ist die so genannte ETK-(Emulator-Tast-Knopf-)Technologie. Bei dieser wird für die Entwicklung und Optimierung eines neuen Steuergeräts ein spezieller Prototyp eingesetzt, der sich von dem später in Serie hergestellten Gerät dadurch unterscheidet, dass eine Vielzahl von Anschlüssen herausgeführt ist, die es einem aufgesetzten Tastknopf erlauben, auf den internen Datenbus des Steuergeräts zuzugreifen, und so einen Speicher des Steuergeräts zu lesen und zu beschreiben, etc.

Diese speziellen Prototypen sind kostspielig, und die herausgeführten Anschlüsse belasten elektrisch die Steuergeräteschaltung, so dass Unterschiede im zeitlichen Verhalten und in den elektrischen Eigenschaften zwischen Prototyp und Serienmodell nicht völlig auszuschließen sind.

### Vorteile der Erfindung

Die vorliegende Erfindung löst das Problem der beschränkten Übertragungskapazität, in dem sie dem Prozessor des Steuergeräts eine zweite Schnittstelle zur Verfügung stellt, die ausschließlich für die Kommunikation mit einem Debugger oder anderen externen Entwicklungstools nutzbar ist. Über diese Schnittstelle können beliebige Informationen zwischen dem Steuergerät und dem Entwicklungstool ausgetauscht werden, ohne dass dadurch das Zeitverhalten bei der Kommunikation über die erste Schnittstelle beeinträchtigt wird. Da die Schnittstelle mit dem Prozessor des Steuergeräts in einer Baueinheit integriert ist, können die Leitungen zwischen dem Prozessor und der Schnittstelle kurz gehalten werden, so dass die kapazitive Belastung der Schaltkreise des Steuergeräts durch diese Schnittstelle gering ist.

Um große Datenmengen in kurzer Zeit über die zweite Schnittstelle übertragen zu können, ist diese vorzugsweise für den Blocktransfer von Daten ausgelegt.

Bei der Baueinheit, in der der Prozessor und die zweite Schnittstelle vereinigt sind, kann es sich um eine Leiterplatte handeln, auf der der Prozessor und die zweite Schnittstelle jeweils einen Chip oder Chipsätze darstellen, vorzugsweise handelt es sich jedoch um einen einzigen Chip, in welchem der Prozessor und die zweite Schnittstelle integriert sind.

Um die Zahl der aus der Baueinheit herausgeführten Anschlüsse einer solchen Baueinheit gering zu halten, ist die zweite Schnittstelle vorzugsweise eine serielle Schnittstelle. Es kann sich z.B. um eine Internet-, Fire-Wire- oder, besonders bevorzugt, um eine USB-Schnittstelle handeln.

Die erste Schnittstelle ist vorzugsweise ebenfalls mit der zweiten Schnittstelle und dem Prozessor in der gleichen Baueinheit vereinigt. So kann darauf verzichtet werden, einen lokalen Bus für die Kommunikation des Prozessors mit der ersten Schnittstelle aus der Baueinheit herauszuführen.

Ein wichtiger Vorteil der USB-Schnittstelle ist ihre Flexibilität bei gleichzeitig einfachem, preiswertem Aufbau. Aufwendige Verwaltungsfunktionen sind am Host des USB-Busses angesiedelt, d.h. bei der hier betrachteten Anwendung im Entwicklungstool. Am Steuergerät selbst ist nur einfache Hardware erforderlich. Da aber der USB kein Multi-Master-Bus ist, sondern sämtliche Übertragungsvorgänge vom Host ausgelöst werden müssen, bedarf es beim Einsatz einer USB-Schnittstelle als zweite Schnittstelle für die Kommunikation mit dem Entwicklungstool der Ausnutzung einiger Besonderheiten des USB.

Eine wichtige Eigenschaft der USB-Schnittstelle ist ihre Fähigkeit, unterschiedliche Übertragungsmodi für die Übertragung zu unterschiedlichen Endpoints zu unterstützen. Insbesondere stehen Blockmodi zur Verfügung, um größere Datenmengen ohne Busoverhead zu übertragen. So können unterschiedlichen Übertragungsaufgaben zwischen Entwicklungstool und Steuergerät wie etwa Messen von Werten, Übertragung von Bypassbotschaften vom oder zum Steuergerät, Ändern von Datenwerten im Speicher des Steuergeräts oder Debugging des Codes des Steuergeräts jeweils eigene Endpoints und über diese jeweils spezifische Prioritäten und an die Anforderungen der Übertragungsaufgabe hinsichtlich Zeitverhalten und Kapazität angepasste Modi zugeordnet werden. So ist z.B. von Vorteil, wenn Bypassbotschaften, die eine hohe Priorität haben müssen, über einen für sie spezifischen Endpoint im Bulk- oder Isochrone-Transfermodus übertragen werden. Um diese Botschaften vorrangig zu verarbeiten, kann das Entwicklungstool so lange ausschließlich deren Endpoints abfragen, bis diese Botschaften abgearbeitet sind. Ein weiterer Vorteil ist die Möglichkeit der Übertragung von hohen Datenraten in eine Übertragungsrichtung. So können z.B. die Messwerte einer konfigurierten Messung mit garantierter Übertragungsbandbreite im Isochrone-Modus mit einer vom Entwicklungstool spezifizierten Paketgröße von bis zu 1023 Bytes übertragen werden. Das Entwicklungstool kann so bereits bei der Konfiguration der Messung die benötigte Busbandbreite reservieren und dadurch sicherstellen, dass durch die Anwesenheit anderer Busteilnehmer (d.h. durch Übertragung von und zu anderen Endpoints) keine Daten verloren gehen.

Das erfindungsgemäße Kraftfahrzeugsteuergerät kann ausschließlich als Prototyp für die Entwicklung eines neuen Steuergerätes eingesetzt werden, das in Serie ohne die zweite Schnittstelle zum Einsatz kommt. Da aber insbesondere bei Realisierung auf dem gleichen Halbleiterchip die mit der Hinzufügung der zweiten Schnittstelle verbundenen Kosten sehr gering sind, kann ein solches Steuergerät auch serienmäßig in ein Kraftfahrzeug eingebaut werden.

Dies hat den weiteren Vorteil, dass mit Hilfe der zweiten Schnittstelle auch am fertigen Fahrzeug im Steuergerät gespeicherte Betriebsparameter auf einfache Weise ausgelesen werden können. Dadurch können Funktionen, die herkömmlicherweise z.B. von kostspieligen Fahrtenschreibern ausgeführt werden, einfach und preiswert in ein erfindungsgemäßes Steuergerät integriert werden.

Zudem ist eine einfache Möglichkeit geschaffen, Fehlerzustände zu messen bzw. zu diagnostizieren. Insbesondere könnte ein handelsüblicher PC zu Diagnosezwecken direkt mit dem Steuergerät kommunizieren.

Weitere Merkmale und Vorteile der Erfindung ergeben sich aus der nachfolgenden Beschreibung eines Ausführungsbeispiels mit Bezug auf die beigefügten Figuren.

### Figuren

Es zeigen:
- Fig.1: ein Blockdiagramm eines herkömmlichen Kraftfahrzeug-Steuergeräts; und
- Fig. 2: ein Blockdiagramm eines erfindungsgemäßen Steuergeräts.

### Beschreibung der Ausführungsbeispiele

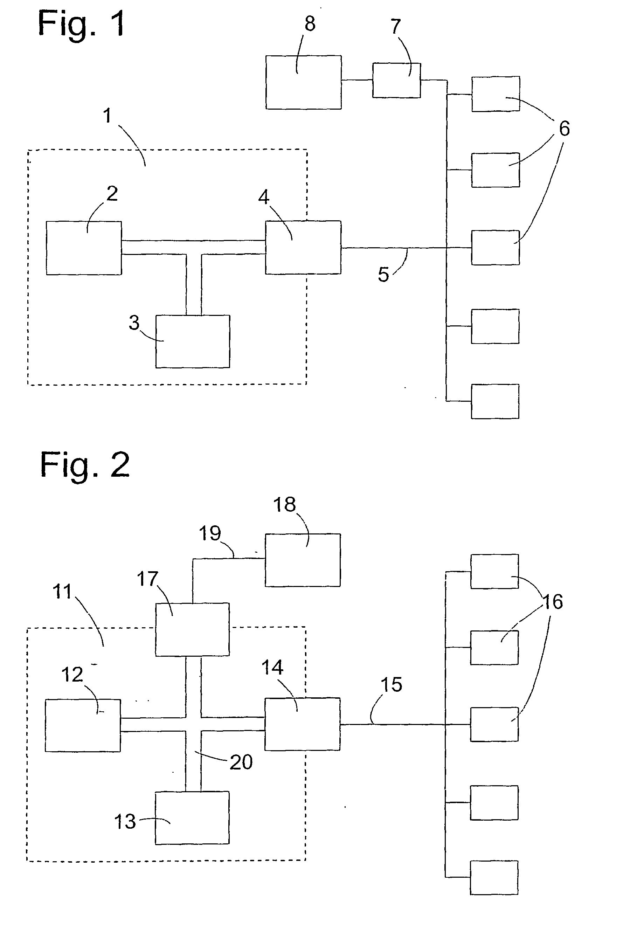

Um die Besonderheiten des erfindungsgemäßen Steuergeräts deutlich zu machen, wird eine kurze Beschreibung eines herkömmlichen Steuergeräts anhand der Fig. 1 vorausgeschickt. Dieses Steuergerät 1 umfasst einen Mikroprozessor 2, einen Speicherbaustein 3 und eine Schnittstelle 4 zu einem Bus, insbesondere einem CAN-Bus 5, an den eine Mehrzahl von Funktionseinheiten 6 des Kraftfahrzeugs angeschlossen sind, welche Messwerte von Betriebsparametern des Fahrzeugs über den Bus 5 an das Steuergerät 1 liefern und/oder Befehle vom Steuergerät 1 empfangen und ausführen. Ein Beispiel für die Funktionseinheiten 6 sind Drehwinkelaufnehmer an einer Kurbelwelle des Fahrzeugmotors, die einen Messwert für den Drehwinkel der Kurbelwelle an das Steuergerät 1 liefern, und Zündkerzen des Motors, die einen vom Steuergerät 1 aus den Messwerten der Drehwinkelaufnehmer abgeleiteten Zündbefehl empfangen. Eine Funktionseinheit 6 kann auch ein Dosiersystem für die Kraftstoffeinspritzung in den Motor sein, das vom Steuergerät angesteuert wird, um während eines Getriebe-Schaltvorgangs die Einspritzmenge kurzzeitig zu reduzieren.

Die Funktionseinheiten können noch diverse andere Mess- und Regelungsaufgaben erfüllen, die hier nicht im Detail beschrieben werden.

Während sich das Steuergerät 1 noch in der Phase der Erprobung und Entwicklung befindet, ist an den CAN-Bus 5 eine Schnittstelle 7 angeschlossen, über die ein auf einem externen Computer implementiertes Entwicklungstool 18 mit dem Steuergerät 1 kommunizieren kann.

Bei dem in Fig. 2 gezeigten erfindungsgemäßen Steuergerät 11 ist ein Mikroprozessor 12 mit einem Speicherbaustein 13 und zwei Schnittstellen 14, 17 über einen internen Adressdaten- und Steuerbus 20 verbunden. Da die Leitungen des internen Busses 20 kurz sind - wenn das Steuergerät aus einer Mehrzahl von auf einer Leiterplatte angeordneten integrierten Schaltungsbausteinen aufgebaut ist, wird die Leitungslänge des internen Busses ca. 10 cm im Allgemeinen nicht überschreiten; wenn die Komponenten 12, 13, 14, 17 auf einem gemeinsamen Halbleitersubstrat integriert sind, liegt die Länge der Busleitungen höchstens im Bereich von wenigen Millimetern - sind auf dem internen Bus 20 hohe Taktraten erreichbar, die es ermöglichen, beide Schnittstellen 14, 17 bis an die Grenze ihrer Übertragungskapazität auszulasten. Das Zeitverhalten der Kommunikation des Mikroprozessors 12 über den seriellen Bus 15 mit den externen Funktionseinheiten 16 ist daher unabhängig vom Umfang der Kommunikation zwischen dem Mikroprozessor 12 und dem an die Schnittstelle 17 angeschlossenen Entwicklungstool 18. Eine Verfälschung des Echtzeitverhaltens des Steuergeräts 11 durch des angeschlossenen Entwicklungstools 18 wird so vermieden.

Der externe Bus 19, der die Schnittstelle 17 mit dem Entwicklungstool 18 verbindet, ist ein serieller Bus. Der Wunsch, eine hohe Übertragungskapazität zwischen Steuergerät 11 und Entwicklungstool 18 zu erreichen, könnte zwar dazu veranlassen, einen parallelen Bus einzusetzen, die Verwendung eines seriellen Busses ist jedoch bevorzugt, weil sie es ermöglicht, mit einer geringeren Zahl von Ein-/Ausgangsanschlüssen des Steuergeräts 11 auszukommen. Dieser Gesichtspunkt ist insbesondere dann wichtig, wenn das komplette Steuergerät 11 auf einem Halbleitersubstrat integriert sein soll.

Als externer Bus kann im Prinzip ein beliebiger serieller Bus eingesetzt werden, der die im Einzelfall an die Übertragungskapazität gestellten Anforderungen erfüllt, insbesondere ein Internet-, Fire-Wire- oder USB-Bus. Besonders bevorzugt ist ein USB-Bus, u.a. wegen der unterschiedlichen Typen von Datentransfer, die ein solcher Bus standardmäßig unterstützt, und die sich jeweils für die verschiedenen, im Laufe des Entwicklungs- und Optimierungsprozesses auftretenden Übertragungsvorgänge eignen.

Das auf einem externen Computer implementierte Entwicklungstool 18 wird während der Entwicklungsphase des Steuergeräts 11 für diverse Anwendungen genutzt, z.B.:
- Debugging: Überwachen und Beeinflussen des im Steuergerät 1 befindlichen Programms und gegebenenfalls Ändern von Befehlen des Programms;
- Messen: Übertragen der Inhalte von einzelnen Zellen des Speicherbausteins 3 mit einer der Häufigkeit ihrer Aktualisierung durch den Mikroprozessor 2 entsprechenden Häufigkeit an das Entwicklungstool 18 und Anzeigen des dem Inhalt der Zelle entsprechenden physikalischen Wert durch das Entwicklungstool;
- Verstellen: Verändern von von dem Steuergerät verwendeten Parametern, um die Auswirkungen der Veränderungen auf das Verhalten des von dem Steuergerät gesteuerten Motors zu untersuchen;
- Bypassen von Funktionen: Da die Rechenzeit und Ressourcen im Steuergerät 1 begrenzt sind, können Änderungen in der Programmierung des Steuergeräts dessen Zeitverhalten verändern. Um Funktionen zunächst ohne Rücksichtnahme auf die begrenzte Leistungsfähigkeit des Steuergeräts entwickeln zu können, kann die Berechnung von Werten einer Funktion im Steuergerät abgeschaltet werden, und die Eingangswerte der Funktion werden zum Entwicklungstool übertragen. Dieses führt die Berechnung der Funktion aus und überträgt anschließend die Funktionsergebnisse zurück ans Steuergerät.

Diesen diversen Anwendungen entsprechen unterschiedliche Anforderungen an das Zeitverhalten der Datenübertragung zwischen Entwicklungstool 18 und Steuergerät 11.

Eine erste Gruppe von Übertragungsvorgängen zwischen Entwicklungstool 18 und Steuergerät 11 sind die nicht zeitkritischen Übertragungen. Sie kommen hauptsächlich beim Debugging vor. Dazu gehören insbesondere die Übertragung des Steuerprogramms und der Ausgangsdaten, mit denen dieses arbeiten soll, in den Speicherbaustein 13 zu Beginn des Betriebs des Steuergeräts oder Änderungen dieser Daten während einer Unterbrechung des Betriebs des Steuergeräts 11. Für diese Art der Übertragung eignet sich insbesondere der sog. Bulk-Modus des USB-Busses. Im Bulk-Modus werden Datenpakete von maximal 64 Byte übertragen, und Fehler bei der Übertragung werden erkannt und behoben. Dieser Übertragungsmodus hat eine niedrigere Priorität als die anderen vom USB-Bus unterstützten Modi und kann daher unterbrochen werden, wenn in einem der anderen Modi Daten zu übertragen sind. Die geringe Länge der Pakete des Bulk-Modus erleichtert die Nutzung auch kleiner Lücken zwischen Übertragungsvorgängen mit höherer Priorität.

Um einen Fehler in einem Steuerprogramm zu finden; ist es häufig nötig, das Programm etappenweise ausführen zu lassen, in dem im Programmcode sog. Breakpoints festgelegt werden, an welchen das Steuergerät die Ausführung des Programms unterbrechen soll. Für die Übertragung der Breakpoints an das Steuergerät und für die Rückmeldung von im Laufe einer solchen Etappe auftretenden Werten von Registerinhalten des Prozessors, Parametern etc. an das Entwicklungstool 18 kann ebenfalls der Bulk-Modus eingesetzt werden.

Bei Messanwendungen geht es darum, die zeitliche Entwicklung von Parametern des Motors zu verfolgen, die von den Funktionseinheiten 16 überwacht und an das Steuergerät 11 gemeldet werden. Diese Parameterwerte werden vom Steuergerät 11 jeweils an festgelegten Speicherplätzen des Speicherbausteins 13 gespeichert und können von dort aus gelesen und über den USB-Bus 19 an das Entwicklungstool 18 weitergeleitet werden. Um die dabei mit hoher Rate anfallenden Datenmengen an das Entwicklungstool 18 zu übertragen, wird vorzugsweise der sog. Isochrone-Modus des USB-Busses eingesetzt. Dieser Modus verwendet Datenpakete von bis zu 1.023 Bytes mit einer Frequenz von einem Paket pro Millisekunde. Da dieser Modus einen sehr geringen Overhead aufweist, sind große Datenmengen effizient übertragbar. Der für die Übertragung im Isochrone-Modus verwendete Code ermöglicht eine Erkennung von Übertragungsfehlern, aber nicht ihre Behebung. Wenn das Entwicklungstool 18 einen Fehler in einem im Isochrone-Modus übertragenen Paket feststellt, kann er, sofern genügend Übertragungskapazität zur Verfügung steht, eine erneute Übertragung anfordern; andernfalls muss das betreffende Paket verworfen werden.

Das Bypassing beinhaltet das Lesen des Inhalts einzelner Speicherzellen im Steuergerät 11 durch das Entwicklungstool 18 oder einen anderen an den USB-Bus angeschlossenen externen Rechner, hier als Bypassrechner bezeichnet, und das anschließende Ersetzen dieses Inhalts durch Beschreiben der Speicherzelle mit einem von dem Entwicklungstool oder dem Bypassrechner neu berechneten Wert. Dieses Bypassing kann z.B. eingesetzt werden, um in der Phase der Entwicklung und Optimierung des Steuergerätes 11 diesem gegenüber das Vorhandensein einer Funktionseinheit 16 zu simulieren, die in der tatsächlichen Anwendungsumgebung, für die das Steuergerät 11 vorgesehen ist, die an dem betreffenden Speicherplatz eingetragenen Werte liefern würde. Es kann auch dazu dienen, Rechenprozesse zu ersetzen, die nach Abschluss der Entwicklung des Steuergeräts 11 von diesem durchgeführt werden sollen, deren Programmierung in der Phase der Entwicklung des Steuergerätes 11, in der das Bypassing eingesetzt wird, noch nicht realisiert ist.

Ein aus dem betreffenden Speicherplatz gelesener Wert kann zusammen mit aus anderen Speicherplätzen gelesenen Werten im Isochrone-Modus an das Entwicklungstool 18 oder dem Bypassrechner übertragen werden; falls lediglich der Wert des betreffenden Speicherplatzes oder einer kleinen Zahl von Speicherplätzen an das Entwicklungstool 18 oder dem Bypassrechner zu übertragen ist, kann hierfür der Interrupt-Modus des USB-Busses eingesetzt werden. Der gleiche Interrupt-Modus dient auch zum Zurückschreiben des vom Entwicklungstool 18 oder dem Bypassrechner berechneten neuen Wertes in dem betreffenden Speicherplatz. Im Interrupt-Modus werden Datenpakete von maximal 64 Byte bei 13 Byte Overhead übertragen. Fehler bei der Übertragung werden erkannt und behoben.

## Patentansprüche

1. Kraftfahrzeugsteuergerät (11), mit einem Prozessor (12) und einer ersten Schnittstelle (14) für die Kommunikation mit Funktionseinheiten (16) des Kraftfahrzeugs und mit einer zweiten Schnittstelle (17) die mit keiner zu steuernden Funktionseinheit des Kraftfahrzeugs verbunden ist, wobei die erste Schnittstelle (14) und die zweite Schnittstelle (17) mit dem Prozessor (12) und einem Speicherbaustein (13) in einer Baueinheit vereinigt sind, **dadurch gekennzeichnet, dass** die erste Schnittstelle (14), die zweite Schnittstelle (17), der Prozessor (12) und der Speicherbaustein (13) über einen bezüglich der Baueinheit internen Bus (20) direkt miteinander verbunden sind, wobei die zweite Schnittstelle (17) in der Lage ist, ohne Beteiligung des Prozessors (12) schreibend und/oder lesend auf Betriebsparameter oder Code des Prozessors (12) in dem Speicherbaustein (13) zuzugreifen.

2. Kraftfahrzeugsteuergerät nach einem der vorhergehenden Ansprüche, **dadurch gekennzeichnet, dass** die zweite Schnittstelle (17) für den Blocktransfer von Daten ausgelegt ist.

3. Kraftfahrzeugsteuergerät nach einem der vorhergehenden Ansprüche, **dadurch gekennzeichnet, dass** die Baueinheit eine Leiterplatte ist.

4. Kraftfahrzeugsteuergerät nach einem der Ansprüche 1 bis 3, **dadurch gekennzeichnet, dass** die Baueinheit ein Halbleiterchip ist.

5. Kraftfahrzeugsteuergerät nach einem der vorhergehenden Ansprüche, **dadurch gekennzeichnet, dass** die zweite Schnittstelle (17) eine serielle Schnittstelle ist.

6. Kraftfahrzeugsteuergerät nach Anspruch 1, **dadurch gekennzeichnet, dass** die zweite Schnittstelle (17) eine Ethernet- oder FireWire-Schnittstelle ist.

7. Kraftfahrzeugsteuergerät nach Anspruch 1, **dadurch gekennzeichnet, dass** die zweite Schnittstelle (17) eine USB-Schnittstelle ist.

8. Kraftfahrzeugsteuergerät nach Anspruch 1, **dadurch gekennzeichnet, dass** die zweite Schnittstelle (17) in der Lage ist, Daten, die vom Prozessor (12) über die erste Schnittstelle (14) empfangen worden sind, im Isochrone-Modus zu übertragen.

9. Kraftfahrzeugsteuergerät nach Anspruch 1, **dadurch gekennzeichnet, dass** die zweite Schnittstelle (17) in der Lage ist, Steuerparameter des Prozessors (12) im Bulk-Modus zu übertragen.

10. Kraftfahrzeugsteuergerät nach Anspruch 1 und Anspruch 7, **dadurch gekennzeichnet, dass** die Schnittstelle (17) in der Lage ist, einzelne Speicherstellen des Speichers (13) im interrupt-Modus zu lesen und/oder zu beschreiben.

11. Verfahren zum Kommunizieren zwischen einem Kraftfahrzeugsteuergerät nach einem der Ansprüche 7 bis 10 und einem externen Host (18), bei dem der Host (18) für unterschiedliche Typen von zwischen ihm und dem Kraftfahrzeugsteuergerät auszutauschenden Daten unterschiedliche USB-Endpoints und Übertragungsmodi festlegt.

12. Verfahren nach Anspruch 11, bei dem der Host die Endpoints gemäß einer Prioritätsreihenfolge abfragt.

## Claims

1. Motor vehicle control device (11) having a processor (12) and a first interface (14) for communicating with functional units (16) of the motor vehicle and having a second interface (17) which is not connected to a functional unit of the motor vehicle which needs to be controlled, the first interface (14) and the second interface (17) being combined with the processor (12) and a memory module (13) in a structural unit, **characterized in that** the first interface (14), the second interface (17), the processor (12) and the memory module (13) are directly connected to one another by means of a bus (20) which is internal as regards the structural unit, the second interface (17) being able to access operating parameters or code of the processor (12) in the memory module (13) such that it can write and/or read it/them without the involvement of the processor (12).

2. Motor vehicle control device according to Claim 1, **characterized in that** the second interface (17) is designed for the block transfer of data.

3. Motor vehicle control device according to one of the preceding claims, **characterized in that** the structural unit is a printed circuit board.

4. Motor vehicle control device according to one of Claims 1 to 3, **characterized in that** the structural unit is a semiconductor chip.

5. Motor vehicle control device according to one of the preceding claims, **characterized in that** the second interface (17) is a serial interface.

6. Motor vehicle control device according to Claim 1, **characterized in that** the second interface (17) is an Ethernet or FireWire interface.

7. Motor vehicle control device according to Claim 1, **characterized in that** the second interface (17) is a USB interface.

8. Motor vehicle control device according to Claim 1, **characterized in that** the second interface (17) is able to transmit data, which have been received by the processor (12) via the first interface (14), in the isochronous mode.

9. Motor vehicle control device according to Claim 1, **characterized in that** the second interface (17) is able to transmit control parameters of the processor (12) in the bulk mode.

10. Motor vehicle control device according to Claim 1 and Claim 7, **characterized in that** the interface (17) is able to read from, and/or write to, individual memory locations of the memory (13) in the interrupt mode.

11. Method for communicating between a motor vehicle control device according to one of Claims 7 to 10 and an external host (18), in which the host (18) defines different USB end points and transmission modes for different types of data to be interchanged between it and the motor vehicle control device.

12. Method according to Claim 11, in which the host interrogates the end points according to a priority sequence.

## Revendications

1. Appareil de commande de véhicule (11) comportant un processeur (12) et une première interface (14) pour communiquer avec les unités fonctionnelles (16) du véhicule et une seconde interface (17) reliée à aucune unité fonctionnelle à commander du véhicule,
la première interface (14) et la seconde interface (17) étant réunies en un ensemble avec le processeur (12) et un composant de mémoire (13),
**caractérisé en ce que**
la première interface (14), la seconde interface (17), le processeur (12) et le composant de mémoire (13) sont directement reliés par un bus (20) interne au composant,
la seconde interface (17) est en mesure d'accéder sans participation du processeur (12), en écriture et/ou en lecteur aux paramètres de fonctionnement ou code du processeur (12) dans le composant de mémoire (13).

2. Appareil de commande de véhicule selon la revendication 1,
**caractérisé en ce que**
la seconde interface (7) est conçue pour le transfert en bloc de données.

3. Appareil de commande de véhicule selon l'une des revendications précédentes,
**caractérisé en ce que**
le composant est une plaque de circuit.

4. Appareil de commande de véhicule selon l'une des revendications 1 à 3,
**caractérisé en ce que**
le composant est une plaquette semi-conductrice.

5. Appareil de commande de véhicule selon l'une quelconque des revendications précédentes,
**caractérisé en ce que**
la seconde interface (17) est une interface série.

6. Appareil de commande de véhicule selon la revendication 1,
**caractérisé en ce que**
la seconde interface (17) est une interface Ethernet ou une interface barrière coupe-feu.

7. Appareil de commande de véhicule selon la revendication 1,
**caractérisé en ce que**
la seconde interface (17) est une interface USB.

8. Appareil de commande de véhicule selon la revendication 1,
**caractérisé en ce que**
la seconde interface (17) est en mesure de transmettre en mode isochrone des données reçues par le processeur (12) par l'intermédiaire de la première interface (14).

9. Appareil de commande de véhicule selon la revendication 1,
**caractérisé en ce que**
la seconde interface (17) est en mesure de transmettre en vrac les paramètres de commande du processeur (12).

10. Appareil de commande de véhicule selon la revendication 1 ou la revendication 7,
**caractérisé en ce que**
l'interface (17) est en mesure de lire et/ou d'écrire dans différents emplacements de la mémoire (13) en mode d'interruption.

11. Procédé de communication entre un appareil de commande de véhicule selon l'une des revendications 7 à 10 et un hôte externe (18) selon lequel l'hôte est fixé pour différents types de données à échanger entre lui et l'appareil de commande du véhicule avec des terminaisons USB différentes et des modes de transmission différents.

12. Procédé selon la revendication 11,
selon lequel
l'hôte interroge les points de terminaison selon un ordre de priorités.
